# FASCICULE DE BREVET EUROPEEN

(11) **EP 0 367 670 B1**
(45) Date de publication et mention de la délivrance du brevet: **08.09.1993**
(21) Numéro de dépôt: 89402999.0
(22) Date de dépôt: 31.10.1989
(51) Int. Cl.: B65G 49/06, B65G 47/22, C03B 35/14

(54) **Dispositif de positionnement de feuilles de verre**
Vorrichtung zur Einstellung von Glastafeln
Device for positioning glass sheets

(30) Priorité: 04.11.1988 DE 3837471
(43) Date de publication de la demande: 09.05.1990
(73) Titulaire: SAINT-GOBAIN VITRAGE INTERNATIONAL, 92400 Courbevoie (FR); VEGLA Vereinigte Glaswerke GmbH, D-52066 Aachen (DE)
(72) Inventeur: Kuster, Hans-Werner, D-5100 Aachen (DE); Vanaschen, Luc, B-4700 Eupen (BE)
(74) Mandataire: Menes, Catherine

(56) Documents cités:
- US-A- 3 701 643
- US-A- 3 992 182

## Description

La présente invention concerne un dispositif de positionnement de feuilles de verre défilant à plat sur un convoyeur et en particulier de feuilles de verre chauffées au-delà de leur température de ramollissement en vue notamment de leur bombage. Elle s'applique par exemple à la production de vitrages automobiles.

Un positionnement correct ou plus précisément une orientation correcte des feuilles de verre sur le convoyeur horizontal est systématiquement nécessaire dès lors que celles-ci doivent occuper une position déterminée dans un poste de traitement. Habituellement, on utilise pour amener les feuilles de verre à la position souhaitée des dispositifs d'alignement qui agissent sur les bords des feuilles de verre à l'aide de broches ou de doigts.

L'alignement des vitrages est relativement peu critique lorsque ces vitrages sont à température ambiante, ce qui est le cas par exemple lors de la découpe ou du doucissage des bords. Mais lorsque ces vitrages sont chauffés au-delà de la température de ramollissement, par exemple peu avant un poste de bombage ou à l'intérieur de celui-ci, les doigts ou les broches agissant sur leurs bords provoquent des déformations locales qui nuisent aux propriétés optiques du vitrage. Il est possible de s'affranchir de tout alignement dans le sens longitudinal du transporteur en déterminant à l'aide d'un détecteur de bord opérant sans contact, par exemple du type barrière photo-électrique, l'instant où le bord d'une feuille de verre franchit un point donné choisi sur le trajet de transport et en calculant sur la base de ce signal temps l'instant auquel, compte-tenu de la vitesse du convoyeur, le vitrage va atteindre sa position finale dans le sens longitudinal et donc auquel les rouleaux du convoyeur devront être immobilisés. Toutefois on ne peut pas supprimer le positionnement des feuilles de verre par rapport au sens transversal du convoyeur et pour celui-ci, on en est réduit, comme auparavant, à les déplacer à l'aide de tiges ou doigts pousseurs qui agissent sur les bords.

Il est connu du brevet US-A-3701643 un dispositif de positionnement comportant un chariot qui se déplace à côté du convoyeur horizontal, longitudinalement à celui-ci et en synchronisme avec la feuille de verre. Sur ce chariot est monté au moins une tige de poussée mobile dans une mesure prédéfinie, s'avançant perpendiculairement à la direction de déplacement du chariot, et agissant sur un bord latéral de la feuille de verre. Selon le document précité, les tiges de poussée sont actionnées par des vérins pneumatiques dont les tiges de piston ont des trajets limités dans les deux sens par des butées parmi lesquelles la butée antérieure est montée en un endroit correspondant à la position souhaitée du vitrage.

Avec ce dispositif de positionnement connu, l'action des tiges de poussée sur les bords latéraux des feuilles de verre est une action intermittente ou par à-coups. Il y a donc un risque que la feuille de verre ramollie soit déformée à cet endroit par les contacts par à-coups.

L'invention a pour but la réalisation d'un dispositif de positionnement d'une feuille de verre constitué d'un chariot déplacé à côté du convoyeur, parallèlement à celui-ci et en synchronisme avec la feuille de verre, sur lequel est monté au moins une tige de poussée qui agisse sur les bords de la feuille de verre d'une manière telle qu'un contact par à-coups soit évité et que le parcours des tiges de poussée s'accomplisse selon une fonction trajet-temps souhaitée quelconque, tout ceci dans le cadre d'une construction robuste et adaptée à la pratique industrielle.

Le dispositif selon l'invention est un dispositif de positionnement servant à l'alignement de feuilles de verre par rapport au sens transversal d'un convoyeur horizontal, perpendiculairement à la direction de transport, en particulier de feuilles de verre chauffées à la température de ramollissement en vue par exemple de leur bombage, ce dispositif comportant un chariot déplaçable longitudinalement à côté du convoyeur, parallèlement à celui-ci et en synchronisme avec les feuilles de verre, sur lequel est montée au moins une tige de poussée mobile -dans une mesure prédéterminée - perpendiculairement à la direction de déplacement du chariot. Cette tige agit sur un bord latéral des feuilles de verre, son déplacement s'effectuant à l'intervention d'un organe d'entraînement relié à elle qui, lors du déplacement longitudinal du chariot, suit un chemin de came monté fixe à côté dudit chariot.

A l'aide du dispositif conforme à l'invention, il est possible de réaliser d'une manière simple un parcours optimal de la tige de poussée. Ce parcours peut par exemple être tel que la tête de tige de poussée se rapproche à très faible vitesse du bord du vitrage et, après avoir atteint sa position de fin de course souhaitée, revient relativement rapidement dans sa position de départ.

Selon un premier exemple de réalisation, la came peut avoir la forme d'une coulisse de guidage du genre boutonnière, dans laquelle s'engage un doigt d'entraînement de sorte que le retour de la tige de poussée vers sa position de départ soit également piloté par cette coulisse de guidage. Il est aussi possible de prévoir une came qui n'assure que le déplacement vers l'avant et de faire en sorte que la tige de poussée soit rappelée dans sa position de départ par des ressorts de traction ou des vérins pneumatiques.

La tige de poussée peut être montée comme telle coulissante. Dans ce cas, le galet d'entraînement est monté directement sur la tige de poussée. De même les ressorts de traction agissent alors directement sur la tige de poussée.

Selon un autre exemple de réalisation plus spécialement préféré, la tige de poussée est montée sur un chariot transversal qui, comme tel, peut coulisser dans la mesure nécessaire sur le chariot longitudinal. Le galet d'entraînement et, le cas échéant, les ressorts de traction sont dans ce cas montés sur le chariot transversal. Cet agencement présente l'avantage de permettre la modification de la position de la tige de poussée sur le chariot transversal de sorte que la longueur active de la tige de poussée peut être adaptée aux conditions rencontrées.

Suivant une autre forme de réalisation avantageuse, la tige de poussée est montée à pivot dans son plan vertical et est pourvue d'un actionneur de pivotement commandé d'une manière telle que la tige de poussée, après l'opération d'alignement, pivote vers le haut d'un petit angle de façon à ce que son extrémité antérieure se retrouve alors au-dessus du niveau de la feuille de verre. Ainsi, la tige de poussée ne peut pas entrer en contact avec la feuille lors du trajet retour du chariot longitudinal, même si la feuille de verre présente des bords longitudinaux courbes.

D'autres détails et caractéristiques avantageuses de l'invention ressortent de la description faite ci-après en référence aux dessins annexés qui représentent :
- figure 1 : une vue en plan d'un poste de positionnement conforme à l'invention,
- figure 2 : une vue en perspective du dispositif de positionnement proprement dit représenté figure 1 et,

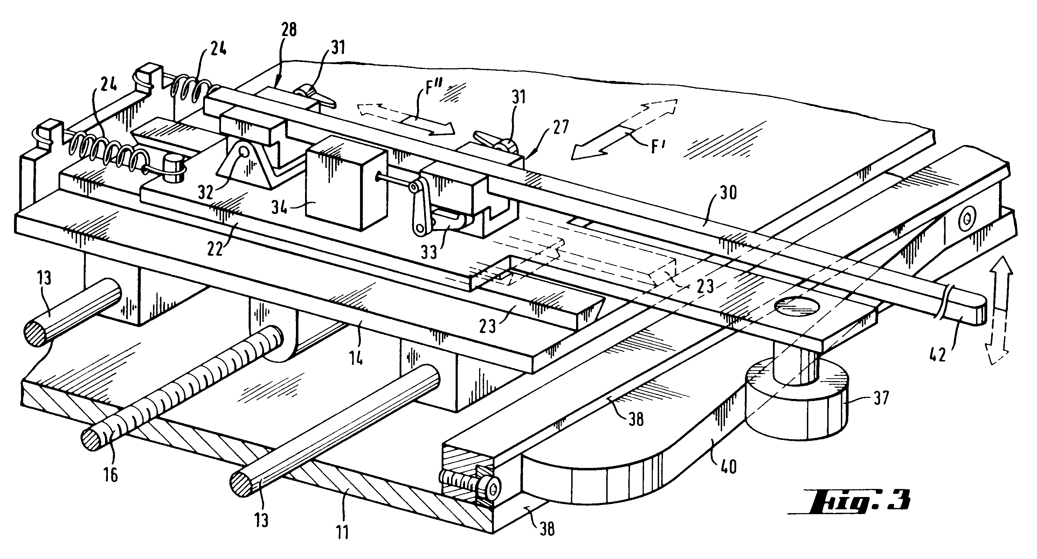

- figure 3 : une vue, à plus grande échelle, d'un détail de la figure 2.

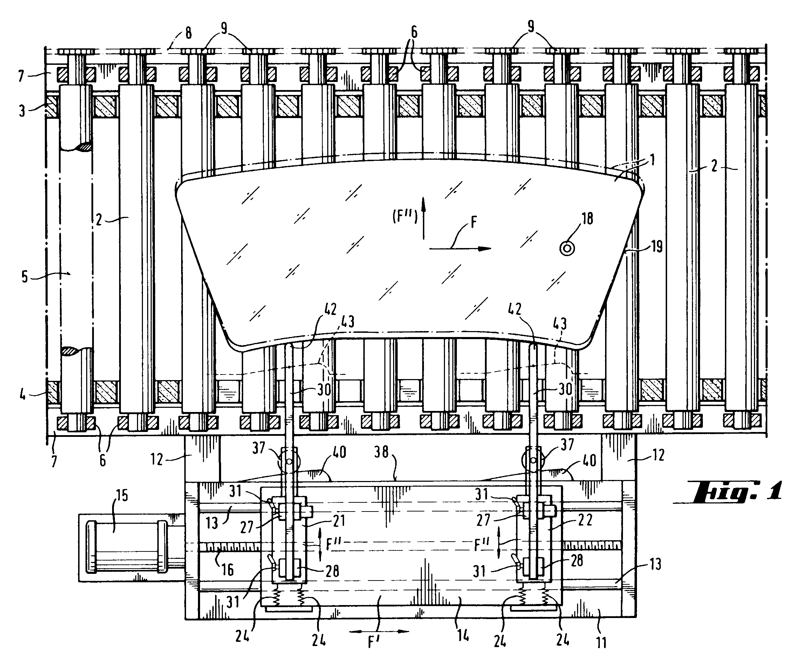

Comme montré à la figure 1, la feuille de verre 1 est amenée, dans le sens de la flèche F, par un convoyeur horizontal formé de rouleaux transporteurs 2, suivant une vitesse réglée en fonction du poste de traitement, ici non représenté, qui peut être par exemple, un poste de bombage. Le convoyeur horizontal est installé dans un four de réchauffage. Les rouleaux transporteurs 2 traversent, à leurs deux extrémités, les parois latérales 3 et 4 du four du type dit tunnel qui est fermé à sa face inférieure par le fond 5. Les rouleaux transporteurs 2 tourillonnent à l'extérieur des parois latérales du four dans des paliers 6 montés sur des longerons de support 7. Les rouleaux transporteurs 2 sont entraînés ensemble par l'intermédiaire de la chaîne d'entraînement 8 qui coopère avec les roues dentées 9 montées sur les rouleaux 2.

D'un côté longitudinal du four est prévue une plaque support horizontale 11 reliée rigidement par l'intermédiaire de consoles 12 à la charpente du convoyeur. Sur la plaque support 11 sont installés des rails 13 parallèles à la direction longitudinale du convoyeur, sur lesquels un chariot 14 peut se déplacer dans le sens de la flèche F′ en synchronisme avec la feuille de verre 1 et parallèlement à celle-ci. L'entraînement du chariot 14 s'effectue par la tige filetée 16 entraînée par le moteur 15. Le moteur 15 est couplé électriquement au mécanisme d'entraînement des rouleaux transporteurs 2 de telle sorte que le chariot 14 se déplace dans le sens de la flèche F′, c'est-à-dire dans le sens de la direction de transport de la feuille de verre 1, à la même vitesse que celle-ci. Un capteur 18 est prévu à un endroit adéquat au-dessus des rouleaux transporteurs pour l'enclenchement du moteur d'entraînement 15. Il peut s'agir par exemple d'un capteur pneumatique ou photoélectrique qui émet un signal de commande au passage du bord antérieur 19 de la feuille 1. Le chariot 14 démarre à l'instant où le vitrage 1 se trouve précisément à sa hauteur et parcourt en synchronisme avec le vitrage, une distance déterminée en fonction de ce qui est nécessaire à l'alignement de la feuille de verre la plus désorientée qui soit.

Le chariot 14 supporte deux chariots transversaux 21, 22, orientés perpendiculairement aux rails 13. Ces chariots transversaux peuvent se déplacer dans le sens transversal sur des glissières 23. Sur ces chariots transversaux 21 et 22 sont montés respectivement des supports 27 et 28 dans chacun desquels est installée une tige de poussée 30. Les tiges de poussée 30 sont bloquées dans la position souhaitée au moyen de vis à oreilles 31.

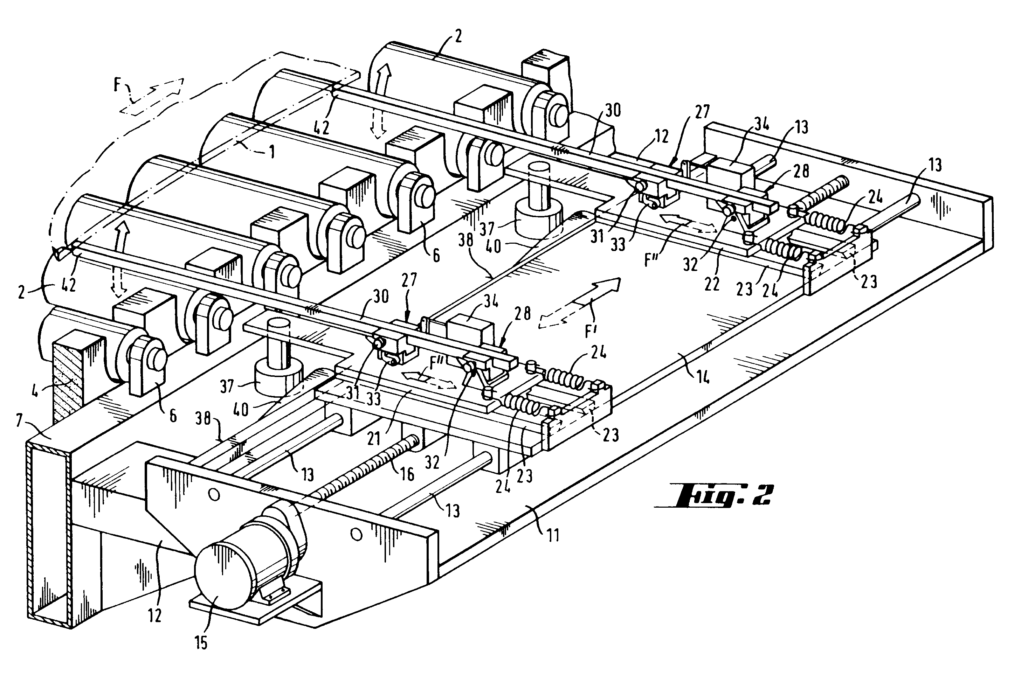

Le support 28 situé du côté du chariot transversal 21 ou 22 éloigné du convoyeur est monté à pivot autour d'un axe 32 visible à la figure 2, tandis que le support 27, situé du côté du chariot transversal proche du convoyeur, est monté de manière à pouvoir se déplacer dans une certaine mesure dans le sens vertical suivant un arc de cercle centré sur l'axe 32. De cette manière, la tige de poussée 30 peut effectuer un mouvement de pivotement dans le sens vertical. Le mouvement de pivotement est amorcé par un levier 33 qui est déplacé dans ses deux positions extrêmes par exemple par un électro-aimant 34.

Un galet d'entraînement 37 est monté sur chacun des chariots transversaux 21 et 22, du côté proche du convoyeur, tandis que des ressorts de traction 24 sont actifs du côté opposé des chariots transversaux 21 et 22, l'autre extrémité des ressorts étant fixée au chariot longitudinal 14. Les ressorts de traction maintiennent les chariots transversaux 21, 22 dans une position déterminée par la position occupée par le galet d'entraînement 37. Dans la position de départ du chariot longitudinal 14, les galets d'entraînement 37 sont appliqués contre la surface de délimitation latérale 38 de la plaque support 11. Des cames 40 sont fixées à des endroits adéquats à cette surface de délimitation 38. Pendant le déplacement du coulisseau longitudinal 14, les galets d'entraînement 37 parviennent sur les cames 40 et sont forcés d'effectuer le mouvement prédéfini par les cames 40 dans le sens de la double flèche F˝. Les cames 40 sont d'une configuration telles qu'elles s'élèvent en pente douce, c'est-à-dire sous un petit angle, vu dans le sens du déplacement de la feuille de verre 1. De cette manière, l'extrémité de tête 42 des tiges de poussée 30 se rapproche chaque fois lentement du bord du vitrage 1 conformément aux courbes en traits interrompus 43, de sorte que tout contact par à-coups avec le bord du vitrage est évité. La position finale souhaitée de l'extrémité de tête 42 de la tige de poussée 30 est indiquée par le point le plus haut de la came 40. Lorsque ce point le plus haut est atteint, la courbe de la came 40 chute brusquement et la tige de poussée 30 est de ce fait rapidement rappelée dans sa position de départ par les ressorts de traction 24.

Dès que les galets d'entraînement 37 quittent les cames 40 pendant le déplacement synchrone du chariot longitudinal 14, ou le cas échéant peu après, le mouvement de retour du chariot longitudinal 14 s'amorce. Etant donné que le bord latéral de la feuille de verre 1 sur lequel les tiges de poussée 30 agissent n'est normalement pas rectiligne mais courbe, il faut faire en sorte que les tiges de poussée 30 n'entrent pas à nouveau en contact avec le bord de la feuille de verre lors du retour du chariot longitudinal 14. Ceci est réalisé grâce au mouvement de pivotement des tiges de poussée 30 autour de l'axe de pivotement 32, l'angle de ce mouvement de pivotement étant relativement petit et étant suffisant pour déplacer l'extrémité de tête 42 des tiges de poussée 30 vers le haut de façon à les ramener au-dessus du plan déterminé par la surface supérieure du vitrage 1. Lorsque le moteur d'entraînement 15 reçoit l'impulsion de commande de retour du chariot 14, l'électro-aimant 34 reçoit simultanément une impulsion de commande par laquelle est actionné le levier 33 qui fait pivoter la tige de poussée 30 vers le haut. Lorsque le chariot 14 est ainsi revenu à sa position de départ, le levier 33 est également ramené dans sa position de départ de sorte que les tiges de poussée se replacent à hauteur du bord de la feuille de verre.

De préférence les cames 40 sont montées remplaçables sur la plaque-support 40 de manière à pouvoir être remplacées par des cames présentant un profil différent lorsque cela s'avère adéquat. De plus, grâce à un coudage latéral des tiges de poussée 30, il est possible de modifier le point d'attaque de ces tiges sur le bord des feuilles de verre 1, par exemple pour d'autres formes de vitrages.

Dans le cas représenté les déplacements des deux tiges de poussée 30 sont synchrones. Cependant, dans certains cas, il est avantageux de faire en sorte que les déplacements des tiges de poussée puissent également être consécutifs dans le temps. Ceci peut être réalisé d'une manière simple par le montage de cames 40 différentes ou par la modification de la position d'une came 40 sur la surface de fixation 38. De même, selon la forme des vitrages, les deux tiges de poussée 30 peuvent être fixées dans des positions différentes sur les chariots 21, lorsque par exemple les bords latéraux des vitrages défilent obliquement par rapport à la direction de transport.

Bien entendu, tous les autres détails de construction, qui ne sont pas essentiels pour l'invention, peuvent être réalisés de n'importe quelle manière appropriée.

## Revendications

1. Dispositif de positionnement servant à l'alignement de feuilles de verre par rapport au sens transversal d'un convoyeur horizontal, perpendiculairement à la direction de transport, en particulier de feuilles de verre chauffées à la température de ramollissement en vue par exemple de leur bombage, comportant un chariot déplaçable longitudinalement à côté du convoyeur, parallèlement à celui-ci et en synchronisme avec les feuilles de verre, sur lequel est montée au moins une tige de poussée mobile -dans une mesure prédéterminée- perpendiculairement à la direction de déplacement du chariot, cette tige agissant sur un bord latéral des feuilles de verre, caractérisé en ce que le déplacement de la tige de poussée (30) s'effectue à l'intervention d'un organe d'entraînement relié à cette tige, qui, lors du déplacement longitudinal du chariot (14) suit un chemin de came monté fixe à côté dudit chariot (14).

2. Dispositif suivant la revendication 1, caractérisé en ce que le chemin de came est déterminé par une came (40) sur laquelle roule un galet d'entraînement (37).

3. Dispositif suivant la revendication 2, caractérisé en ce que le galet d'entraînement (37) est maintenu en contact avec la came (40) par des ressorts de traction (24).

4. Dispositif suivant l'une quelconque des revendications 1 à 3, caractérisé en ce que la tige de poussée (30) est montée réglable en position sur un chariot (21, 22) déplaçable dans le sens transversal, monté sur le chariot longitudinal (14).

5. Dispositif suivant l'une quelconque des revendications 1 à 4, caractérisé en ce que la tige de poussée (30) est montée à pivot dans le sens vertical autour d'un axe de pivotement horizontal (32).

6. Dispositif suivant la revendication 5, caractérisé en ce que la tige de poussée (30) est pourvue d'un actionneur de pivotement (33, 34) à l'intervention duquel, lors du retour du chariot longitudinal (14) vers sa position de départ, elle pivote dans une position supérieure dans laquelle son extrémité de tête (42) est disposée au-dessus du niveau de la surface supérieure de la feuille de verre (1).

7. Dispositif suivant l'une quelconque des revendications 1 à 6, caractérisé en ce que la came (40) est montée remplaçable sur une plaque-support (11).

8. Dispositif suivant l'une quelconque des revendications 1 à 7, caractérisé en ce que la forme de la came est choisie telle que la tige de poussée (30) se rapproche lentement du bord de la feuille de verre (1) et s'en écarte rapidement après avoir atteint sa position extrême.

9. Dispositif suivant l'une quelconque des revendications 1 à 8, caractérisé en ce que deux chariots transversaux (21, 22) sont montés sur le chariot longitudinal (14) et sont pourvus chacun d'une tige de poussée (30).

10. Dispositif suivant la revendication 9, caractérisé en ce que les tiges de poussée (30) montées sur les deux chariots transversaux (21, 22) peuvent être fixées indépendamment l'une de l'autre dans des positions différentes.

11. Dispositif suivant le revendication 9 ou 10, caractérisé en ce que les deux chariots transversaux (21, 22) parcourent des courses différentes suite au montage de cames (40) différentes.

12. Dispositif suivant l'une des revendications 9 à 10 caractérisé en ce que les déplacements des différentes tiges de poussée (30) sont consécutifs dans le temps.

## Claims

1. Positioning device, serving for aligning glass sheets relative to the transverse direction of a horizontal conveyor, perpendicularly to the direction of conveying, in particular of glass sheets heated to the softening temperature for the purpose, for example, of bending them, the device comprising a carriage displaceable longitudinally alongside the conveyor parallel to it and in synchronism with the glass sheets, on which is mounted at least one thrust rod movable, to a predetermined amount, perpendicularly to the direction of travel of the carriage, this rod acting upon the lateral edge of the glass sheets, characterized in that the displacement of the thrust rod (30) takes place by the intervention of a drive element connected to said rod, which, during the longitudinal displacement of the carriage (14), follows a cam path mounted fixed alongside said carriage (14).

2. Device according to Claim 1, characterized in that the cam path is determined by a cam (40) on which a driving roller (37) runs.

3. Device according to Claim 2, characterized in that the driving roller (37) is held in contact with the cam (40) by tension springs (24).

4. Device according to any one of Claims 1 to 3, characterized in that the thrust rod (30) is mounted adjustable in position on a carriage (21, 22) displaceable in the transverse direction and mounted on the longitudinal carriage (14).

5. Device according to any one of Claims 1 to 4, characterized in that the thrust rod (30) is mounted to pivot in the vertical direction about a horizontal pivot axis (32).

6. Device according to Claim 5, characterized in that the thrust rod (30) is provided with an actuator for pivoting (33, 34), upon the intervention of which, during the return of the longitudinal carriage (14) to its starting position, the rod pivots into an upper position, in which its head end (42) is disposed above the level of the upper surface of the glass sheet (1).

7. Device according to any one of Claims 1 to 6, characterized in that the cam (40) is removably mounted on a support plate (11).

8. Device according to any one of Claims 1 to 7, characterized in that the shape of the cam is so chosen that the thrust rod (30) approaches the edge of the glass sheet (1) slowly and moves away from it rapidly after having reached its extreme position.

9. Device according to any one of Claims 1 to 8, characterized in that two transverse carriages (21, 22) are mounted on the longitudinal carriage (14) and are each equipped with a thrust rod (30).

10. Device according to Claim 9, characterized in that the thrust rods (30) mounted on the two transverse carriages (21, 22) can be fixed independently of each other in different positions.

11. Device according to Claim 9 or 10, characterized in that the two transverse carriages (21, 22) follow different paths as a consequence of the mounting of different cams (40).

12. Device according to one of Claims 9 to 10, characterized in that the displacements of the different thrust rods (30) are consecutive in time.

## Patentansprüche

1. Vorrichtung zum Ausrichten von Glasscheiben in Querrichtung eines Horizontalförderers senkrecht zur Transportrichtung, insbesondere von auf Erweichungstemperatur erhitzten Glasscheiben, beispielsweise vor ihrem Biegen, mit einem seitlich neben dem Förderer parallel zu diesem und synchron mit den Glasscheiben verfahrbaren Schlitten, auf dem mindestens eine quer zur Bewegungsrichtung des Schlittens um ein vorgegebenes Maß bewegbare Schubstange gelagert ist, die auf eine seitliche Kante der Glasscheiben einwirkt, **dadurch gekennzeichnet,** daß die Verschiebung der Schubstange (30) durch einen mit dieser Stange verbundenen Mitnehmer erfolgt, der während der Längsbewegung des Schlittens (14) einer seitlich dieses Schlittens (14) stationär angeordneten Kurvenbahn folgt.

2. Vorrichtung nach Anspruch 1, dadurch gekennzeichnet, daß die Kurvenbahn durch eine Kurvenscheibe (40) bestimmt ist, auf der eine Mitnehmerrolle (37) abrollt.

3. Vorrichtung nach Anspruch 2, dadurch gekennzeichnet, daß die Mitnehmerrolle (37) durch Zugfedern (24) in Kontakt mit der Kurvenscheibe (40) gehalten wird.

4. Vorrichtung nach einem der Ansprüche 1 bis 3, dadurch gekennzeichnet, daß die Schubstange (30) auf einem in Querrichtung verschiebbaren Schlitten (21;22), der auf dem Längsschlitten (14) befestigt ist, in ihrer Position verstellbar angeordnet ist.

5. Vorrichtung nach einem der Ansprüche 1 bis 4, dadurch gekennzeichnet, daß die Schubstange (30) um eine horizontale Schwenkachse (32) in vertikaler Richtung verschwenkbar gelagert ist.

6. Vorrichtung nach Anspruch 5, dadurch gekennzeichnet, daß die Schubstange (30) mit einem Schwenkantrieb (33,34) versehen ist, durch den sie beim Zurückfahren des Längsschlittens (14) in seine Ausgangsstellung in eine obere Stellung verschwenkt wird, in der sich ihr Kopfende (42) oberhalb des Niveaus der oberen Oberfläche der Glasscheibe (1) befindet.

7. Vorrichtung nach einem der Ansprüche 1 bis 6, dadurch gekennzeichnet, daß die Kurvenscheibe (40) auf einer Trägerplatte (11) auswechselbar angeordnet ist.

8. Vorrichtung nach einem der Ansprüche 1 bis 7, dadurch gekennzeichnet, daß die Form der Kurvenscheibe so gewählt ist, daß die Schubstange (30) sich langsam dem Rand der Glasscheibe (1) nähert und sich nach dem Erreichen ihrer Endposition schnell entfernt.

9. Vorrichtung nach einem der Ansprüche 1 bis 8, dadurch gekennzeichnet, daß auf dem Längsschlitten (14) zwei Querschlitten (21,22) angeordnet sind, die jeweils mit einer Schubstange (30) versehen sind.

10. Vorrichtung nach Anspruch 9, dadurch gekennzeichnet, daß die auf den beiden Querschlitten (21,22) angeordneten Schubstangen (30) voneinander unabhängig in unterschiedlichen Positionen festgelegt werden können.

11. Vorrichtung nach Anspruch 9 oder 10, dadurch gekennzeichnet, daß die beiden Querschlitten (21,22) durch die Anordnung unterschiedlicher Kurvenscheiben (40) unterschiedliche Bewegungsabläufe ausführen.

12. Vorrichtung nach einem der Ansprüche 9 und 10, dadurch gekennzeichnet, daß die Bewegungen der unterschiedlichen Schubstangen (30) zeitlich aufeinander folgen.
